# EUROPEAN PATENT SPECIFICATION

(11) **EP 2 857 337 B1**
(45) Date of publication and mention of the grant of the patent: **29.06.2016**
(21) Application number: 14002705.3
(22) Date of filing: 02.08.2014
(51) Int. Cl.: B65H 51/22, D04B 15/48, G05B 19/042

(54) **Yarn-feeding apparatus provided with a plurality of stacks of electronically-interconnected, positive yarn feeders**
Garnzufuhrvorrichtung mit mehreren Stapeln elektronisch vernetzter positiver Garnzuführer
Appareil d'alimentation de fils pourvu d'une pluralité de piles électroniquement interconnectées, fournisseurs positifs de fil

(30) Priority: 02.10.2013 IT TO20130786
(43) Date of publication of application: 08.04.2015
(73) Proprietor: L.G.L. Electronics S.p.A., 24024 Gandino (Bergamo) (IT)
(72) Inventor: Zenoni, Pietro, I-24026 Leffe (BG) (IT); Gotti, Luca, I-24021 Albino (BG) (IT)
(74) Representative: Modiano, Micaela Nadia

(56) References cited:
- EP-A1- 1 502 980
- EP-A1- 1 857 898
- EP-A1- 1 953 648
- CN-B- 101 858 014
- US-A1- 2004 238 060

## Description

"Yarn-feeding apparatus provided with a plurality of stacks of electronically-interconnected, positive yarn feeders"

The present invention relates to a yarn-feeding apparatus provided with a plurality of stacks of electronically-interconnected, positive yarn feeders.

Patent applications EP 13000427.8 and EP 13003738.5 disclose so-called "positive" yarn feeders. Such yarn feeders are provided with a yarn-winding drum, which is driven to rotate by a motor for drawing yarn from a reel and delivering it to a downstream, textile machine, e.g., a circular knitting machine. The body of the feeder has two opposite surfaces which have mutually engageable profiles for the connection of a plurality of identical feeders in a stacked configuration. Each feeder is provided with a respective microcontroller, which is electronically connected to the microcontrollers of the yarn feeders adjacent to it in the stack via respective male/female connectors.

A yarn-feeding apparatus generally comprises a plurality of stacks of positive yarn feeders which are interconnected as above. Each stack communicates with a central control unit via a differential serial bus, e.g., a CAN-bus or a bus RS485, to which the head feeders of the stacks are connected. Therefore, each feeder is a "node" of the feeder network.

A drawback of the above-described system is that the conventional differential serial bus, such as the above-mentioned ones, allow only a limited number of nodes to be connected, e.g., 256 nodes, while some applications require even more than 400 feeders to be controlled independently from one another.

In order to fulfill such requests, it is known either to directly connect two or more independent serial lines to a single control unit, as disclosed in EP 1 502 980 A1, or to connect a repeater to a first serial line, which is directly connected to the control unit, in order to repeat messages to a second serial line.

However, the above solutions both have the drawback that they make it more complicated, as well as more expensive, to install and to manage the yarn-feeding apparatus.

Therefore, it is a main object of the present invention to provide a yarn-feeding apparatus provided with a plurality of stacks of electronically-interconnected, positive yarn feeders, which allow a higher number of feeders to be independently controlled, in consideration of the limitations of the traditional, differential serial buses, in an easier and less expensive manner with respect to the known solutions such as the above-mentioned ones, in terms of both installation and management of the apparatus.

The above object and other advantages, which will become apparent from the following description, are achieved by the yarn-feeding apparatus having the features recited in claim 1, while the dependent claims state other advantageous, though secondary, features of the invention.

The invention will be now described in more detail, with reference to a preferred, non-exclusive embodiment shown by way of non-limiting example in the attached drawings, wherein:
Fig. 1 is a front view of a positive yarn feeder of the type to which the present invention is referred;
Fig. 2 is a perspective view showing a triad of positive yarn feeders of the type shown in Fig. 1, which are interconnected to form a stack;
Fig. 3 is a block diagram showing a yarn-feeding apparatus in a first embodiment of the invention;
Fig. 4 is a block diagram showing a stack of feeders connected to the yarn-feeding apparatus of Fig. 3 in more detail;
Fig. 5 is a diagram showing a sequence of messages transmitted on the yarn-feeding apparatus of Fig. 3;
Fig. 6 is a block diagram showing a yarn-feeding apparatus in a second embodiment of the invention;

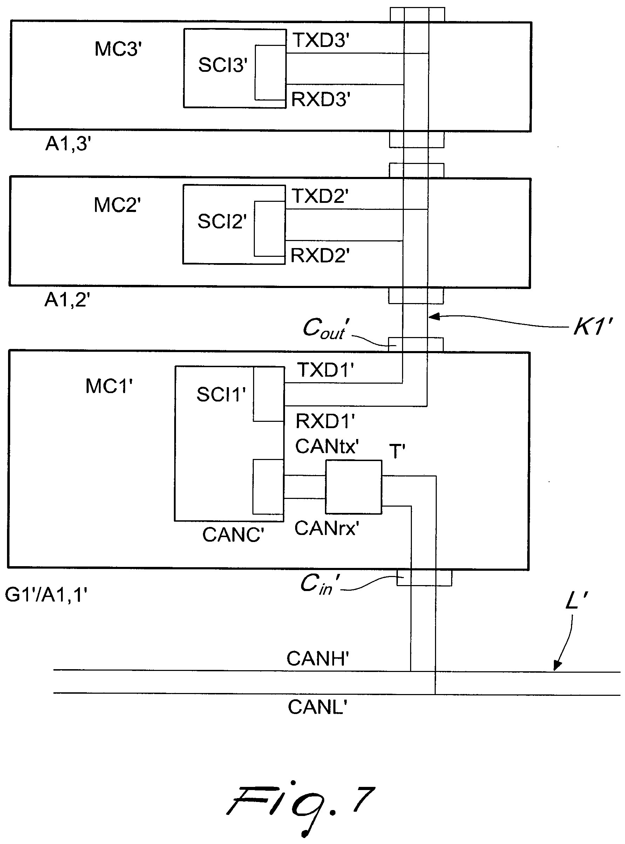

Fig. 7 is a block digram showing a stack of feeders connected to the yarn-feeding apparatus of Fig. 6 in more detail;
Fig 8 is a diagram showing a sequence of messages transmitted on the yarn-feeding apparatus of Fig. 6.

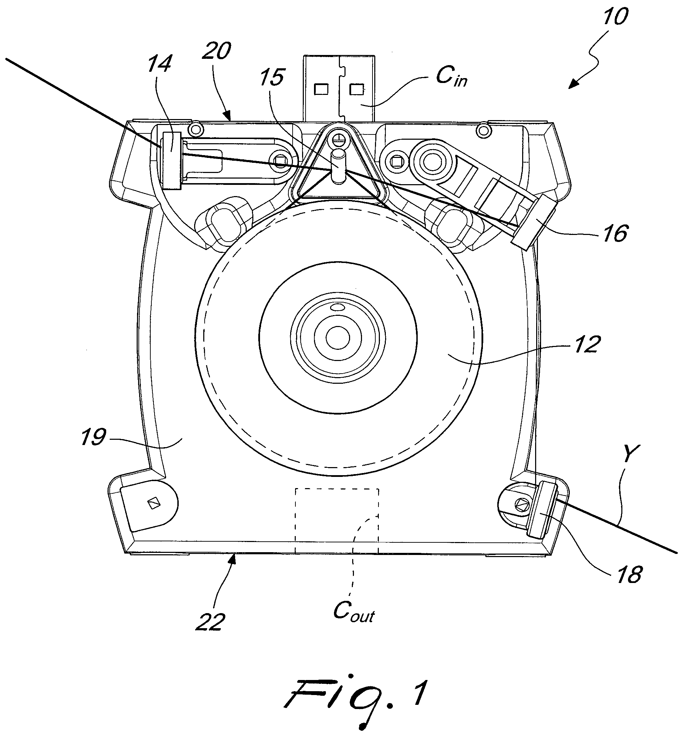

With initial reference to Fig. 1, a positive yarn-feeder 10 is provided with a motorized yarn-winding drum 12 which draws yarn Y from a reel (not shown) and delivers it to a downstream textile machine, such as a circular knitting machine (not shown). In a manner known per se, yarn Y passes through an inlet yarn-guide eyelet 14, is wound a few times, e.g., 3 or 4 times, between drum 12 and a coil-separing rod 15, then engages a device 16 which is adapted to enable the rotation of drum 12 as a function of the fluctuations in the yarn tension, and finally passes through an outlet yarn-guide eyelet 18.

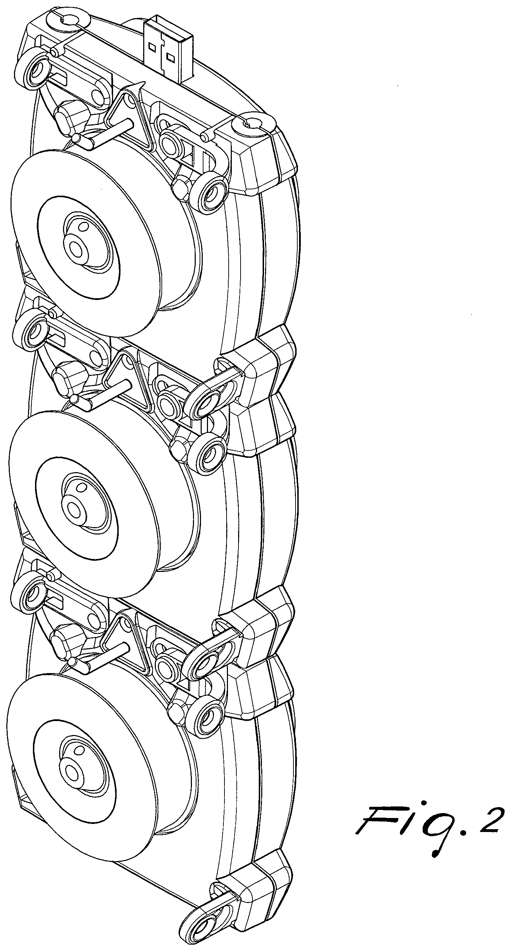

Feeder 10 is provided with a housing 19 having two opposite surfaces 20, 22, which have mutually engageable profiles for connection of a plurality of feeders of the same type in a stacked configuration, as shown in Fig. 2. In particular, each feeder is provided with a respective microcontroller, which is electronically connected to the microcontrollers of the yarn feeders adjacent to it via respective male/female connectors Cin/Cout arranged on said mutually engaged, opposite surfaces 20, 22 of housing 19 (Fig. 1).

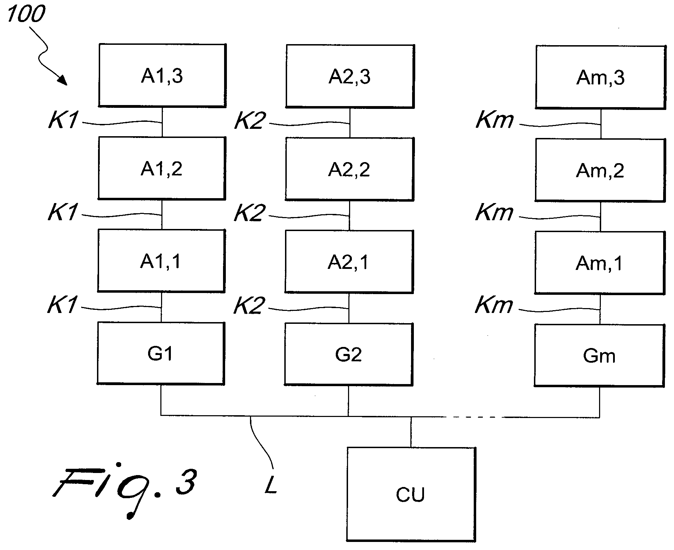

Fig. 3 is a block diagram of a yarn-feeding apparatus 100 including m stacks of positive yarn feeders. The feeders of the apparatus are univocally defined by a reference A1,1, A1,2, A1,3, A2,1, A2,2, A2,3, ..., Am,1, Am,2, Am,3, wherein the first subscript represents the stack to which the feeder belongs, while the second subscript represents the position of the feeder in the respective stack. In the example described herein, each stack is comprised of three feeders.

The stacks of feeders exchange data with a control unit CU via a main serial bus L, preferably a differeential serial bus such as a CAN-bus or a bus RS485, to which the head feeders of the respective stacks are connected. In the embodiments described herein by way of example, reference will be made to a conventional CAN-bus.

With the apparatus of the invention, at least one of the feeders of the stack, rather than being directly connected to main serial bus L, is connected to a respective secondary serial bus K1, K2, ..., Km, which, in turn, is connected to main serial bus L via a respective gateway G1, G2, ..., Gm, which is programmed for reencoding the messages transmitted by control unit CU on main serial bus L, into corresponding messages for the feeders connected to secondary serial bus K1, K2k, ..., Km, and vice versa.

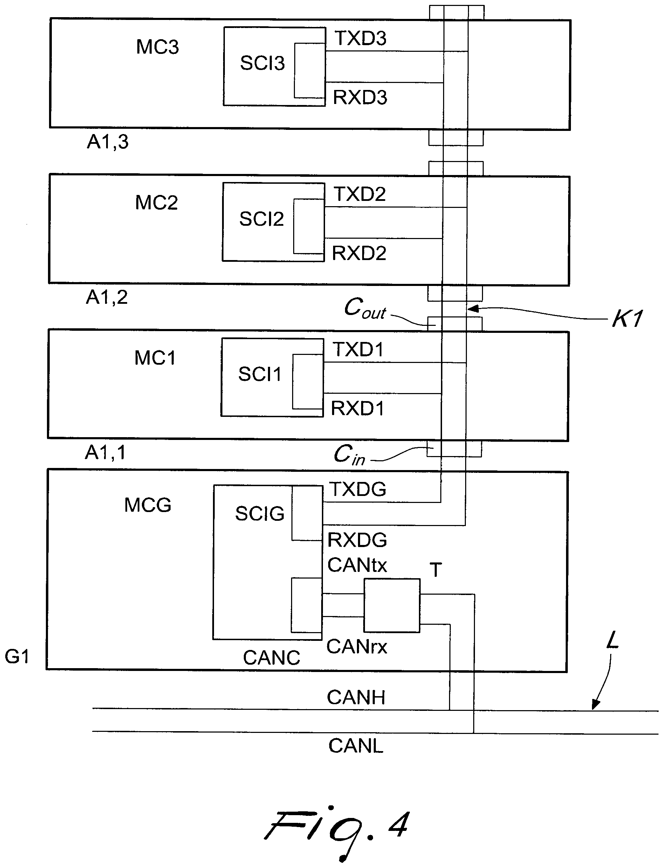

In this first embodiment of the invention, which is shown in Figs. 3 and 4, each gateway G1, G2, ..., Gm consists of a hardware device, which is placed on top of the respective stack of feeders and is provided with an own microcontroller MCG.

Fig. 4 illustrates the first stack of feeders in more detail. Gateway G1 comprises a differential transceiver T which is connected, on one side, to main serial bus L, which is depicted in Fig. 4 by two differential lines CANH and CANL; on the other side, differential transceiver T is connected to a CAN controller CANC, which is integrated in microcontroller MCG of the gateway, via two logic level lines CANrx and CANtx, which are respectively dedicated to the received data and to the transmitted data. CAN Controller CANC is provided with a serial communication interface SCIG, to which secondary serial bus K1 is connected. The latter consists of two logic level lines RXD and TXD which are respectively dedicated to the received data and to the transmitted data.

Microcontrollers MC1, MC2 and MC3 of the three feeders of the stack, in a way known per se, incorporate respective serial communication interfaces SCI1, SCI2 and SCI3, each of which is connected to logic level lines RXD and TXD of secondary bus K1 via respective branches TXD1, RDX1, TDX2, RDX2, and TDX3, RDX3, which are respectively dedicated to the received data and to the transmitted data.

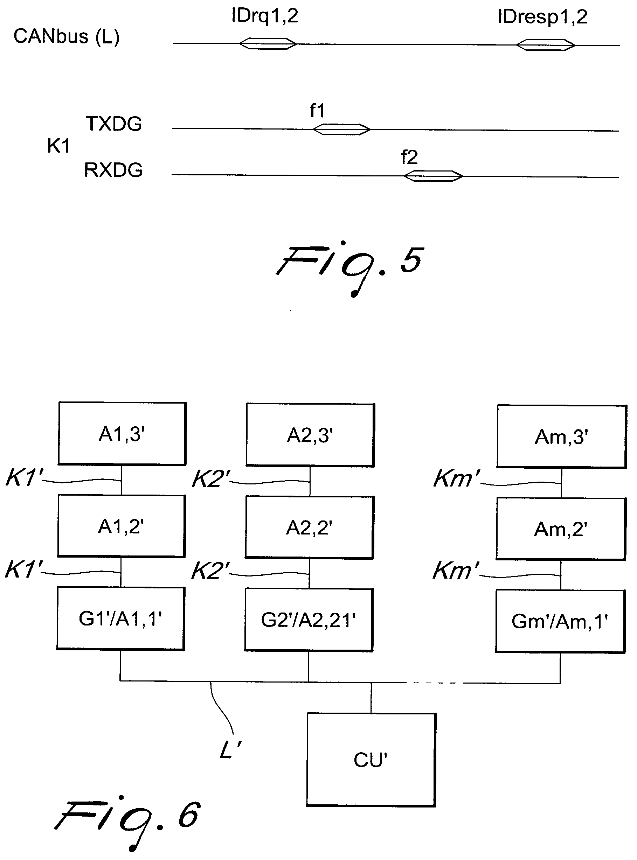

By way of example, Fig. 5 illustrates a sequence of signals transmitted on main bus L and secondary bus K1 of the first stack.

Frame Idrq1,2 represents a request transmitted by control unit CU to feeder A1,2, i.e., the second feeder of the first stack, on main serial bus L. In response to request IDrq1,2, microcontroller MCG of gateway G1 of the first stack generates a corresponding request f1 to feeder A1,2 sent on transmission line TXDG of secondary serial bus K1. Microcontroller MC2 of feeder A1,2 responds to request f1 by a response f2 sent on receiving line RXDG of secondary serial bus K1. Response frame f2 is re-encoded into a corresponding response IDresp1,2 to control unit CU on main serial bus L.

The programming of the yarn-feeding apparatus described above falls within the normal knowledge of the person skilled in the art and, therefore, will not be disclosed in detail herein.

With this embodiment, all the feeders may be identical to each other, with considerable advantages in terms of modularity and ease of installationof the yarn-feeding apparatus.

The maximum number of feeders which may be controlled by the yarn-feeding apparatus described above is given by the maximum number of nodes which may be controlled by the main serial bus, e.g., 256 nodes in case of a CAN-bus, multiplied by the number of feeders forming a stack, e.g., three feeders in the above-described embodiment, for a total amount of 768 feeders. In addition, as the connections between the feeders forming a stack are very short (in the order of a few centimeters), the secondary bus may use logic levels, i.e., it may be directly connected to the pins of the respective controller via branches TXD1, RDX1, TDX2, RDX2, and TDX3, RDX3, without providing each feeder with a respective differential transceiver. As the person skilled in the art will appreciate, this circumstance makes the apparatus very unexpensive to be equipped.

Fig. 6 illustrates an alternative embodiment of the invention, in which gateway G1', G2', ..., Gm' is incorporated in the microprocessor of the feeder on top of the stack A1,1', A2,1', ..., Am,1', which, accordingly, is directly connected to main serial bus L'.

As in the previous embodiment, gateway G1' comprises a differential transceiver T' which is connected, on one side, to main serial bus L', which is depicted in Fig. 6 by two differential lines CANH' and CANL'; on the other side, differential transceiver T' is connected to a CAN controller CANC', which is integrated in microcontroller MC1' of the first feeder, via two logic level lines CANrx' and CANtx' which are respectively dedicated to the received data and to the transmitted data. CAN Controller CANC' incorporates a serial communication interface SCI1 of the first feeder, to which secondary serial bus K1' is connected. The latter consists of two logic level lines RXD' and TXD', which are respectively dedicated to the received data and to the transmitted data.

The operation of the apparatus in relation to the exchange of messages is similar to the previous embodiment, with the exception of the messages for the head feeders of the stacks.

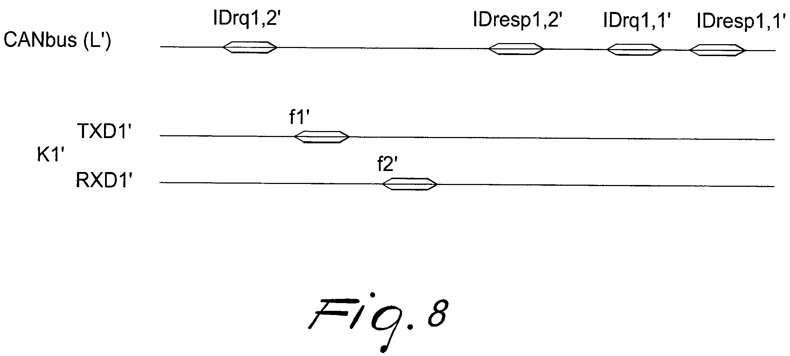

As shown in Fig. 8, in response to a request IDrq1,2 transmitted on main serial bus L' by control unit CU' to feeder A1,2', i.e., the second feeder in the first stack, the system operates as in the previous case.

On the contrary, in response to a subsequent request IDrq1,1' to feeder A1,1', i.e., the head feeder of the first stack, microcontroller MC1' of this feeder does not reencode the message, because it is the recipient, but directly generates a response on main bus L', which response is depicted by frame Idresp1,1'.

Also in this case, all the feeders may have the same structure in terms of mechanical connection. However, the head feeder in the stack should incorporate the above-described circuitry to act as a gateway and should be programmed accordingly.

## Claims

1. A yarn-feeding apparatus, comprising a plurality of stacks of positive yarn feeders (A1,1, A1,2, A1,3, A2,1, A2,2, A2,3, ..., Am,1, Am,2, Am,3) each provided with a respective microcontroller (MC1, MC2, MC3) which is electronically connected to the microcontrollers of the positive yarn feeders adjacent to it in the stack, and a control unit (CU) adapted to exchange data with said stacks of positive yarn feeders via a main serial bus (L), **characterized in that** at least one of said positive yarn feeders is connected to a respective secondary serial bus (K1, K2k, ..., Km) which, in turn, is connected to said main serial bus (L) via a respective gateway (G1, G2, ..., Gm) which is programmed for reencoding messages transmitted by said control unit (CU) on said main serial bus (L) into corresponding messages on said secondary serial bus (K1, K2k, ..., Km), and vice versa.

2. The yarn-feeding apparatus of claim 1, **characterized in that** said gateway (G1', G2', ..., Gm') is incorporated in a positive yarn feeder arranged on top of the respective stack (A1,1', A2,1', ..., Am,1').

3. The yarn-feeding apparatus of claim 1, **characterized in that** said gateway (G1, G2, ..., Gm) consists of a hardware device which is arranged on top of the respective stack of positive yarn feeders (A1,1, A2,1, ..., Am,1) and is provided with a respective microcontroller (MCG).

4. The yarn-feeding apparatus of any of claims 1 to 3, **characterized in that** said gateway (G1, G2, ..., Gm) comprises a differential transceiver (T) which is connected, on one side, to said main serial bus (L) and, on the other side, to a controller (CANC) provided with an serial communication interface (SCIG) to which said secondary serial bus (K1) is connected.

5. The yarn-feeding apparatus of any of claims 1 to 4, **characterized in that** said secondary serial bus (K1) consists of two logic level lines (RXD, TXD) for received data and transmitted data respectively, which are directly connected to the pins of the microcontrollers of the respective positive yarn feeders.

6. The yarn-feeding apparatus of claim 1, **characterized in that** said main serial bus (L, L') is a CAN-bus.

7. The yarn-feeding apparatus of claim 1, **characterized in that** said main serial bus (L, L') is a RS485 bus.

## Patentansprüche

1. Garnzufuhrvorrichtung, mit mehreren Stapeln positiver Garnzuführer (A1,1, A1,2, A1,3, A2,1, A2,2, A2,3, ..., Am,1 Am,2, Am,3), die jeder mit einem zugehörigen Mikrocontroller (MC1, MC2, MC3) versehen sind, der elektronisch mit den Mikrocontrollern der zu ihm benachbarten positiven Garnzuführer in dem Stapel verbunden ist, und einer Steuereinheit (CU), die dazu ausgeführt ist, Daten mit den Stapeln der positiven Garnzuführer über einen seriellen Hauptbus (L) auszutauschen,
**dadurch gekennzeichnet, dass** zumindest einer der positiven Garnzuführer mit einem entsprechenden seriellen Hilfsbus (K1, K2k, ..., Km) verbunden ist, der wiederum über ein entsprechendes Gateway (G1, G2, ..., Gm) mit dem seriellen Hauptbus (L) verbunden ist, wobei das Gateway dazu programmiert ist, von der Steuereinheit (CU) auf dem seriellen Hauptbus (L) übertragende Meldungen in entsprechende Meldungen auf dem seriellen Hilfsbus (K1, K2k, ..., Km) zu kodieren und umgekehrt.

2. Garnzufuhrvorrichtung nach Anspruch 1,
**dadurch gekennzeichnet, dass** das Gateway (G1', G2', ..., Gm') in einem positiven Garnzuführer enthalten ist, der oben auf dem entsprechenden Stapel (A1,1', A2,1', ..., Am,1') angeordnet ist.

3. Garnzufuhrvorrichtung nach Anspruch 1,
**dadurch gekennzeichnet, dass** das Gateway (G1, G2, ..., Gm) aus einer Hardwareeinrichtung besteht, die oben auf dem entsprechenden Stapel positiver Garnzuführer (A1,1, A2,1, ..., Am,1) angeordnet und mit einem zugehörigen Mikrocontroller (MCG) versehen ist.

4. Garnzufuhrvorrichtung nach einem der Ansprüche 1 bis 3,
**dadurch gekennzeichnet, dass** das Gateway (G1, G2, ..., Gm) einen Differential-transceiver (T) aufweist, der auf einer Seite mit dem seriellen Hauptbus (L) und auf der anderen Seite mit einem Controller (CANC) verbunden ist, welcher mit einer seriellen Kommunikationsschnittstelle (SCIG) versehen ist, mit der der serielle Hilfsbus (K1) verbunden ist.

5. Garnzufuhrvorrichtung nach einem der Ansprüche 1 bis 4,
**dadurch gekennzeichnet, dass** der serielle Hilfsbus (K1) aus zwei logischen Niveauzeilen (RXD, TXD) für empfangene Daten bzw. übertragene Daten besteht, die unmittelbar mit den Anschlüssen des Mikrocontrollers des entsprechenden positiven Garnzuführers verbunden sind.

6. Garnzufuhrvorrichtung nach Anspruch 1,
**dadurch gekennzeichnet, dass** der serielle Hauptbus (L, L') ein CAN-Bus ist.

7. Garnzufuhrvorrichtung nach Anspruch 1,
**dadurch gekennzeichnet, dass** der serielle Hauptbus (L, L') ein RS485-Bus ist.

## Revendications

1. Appareil d'alimentation en fil, comprenant une pluralité de piles d'éléments d'alimentation en fil positive (A1,1, A1,2, A1,3, A2,1, A2,2, A2,3, ..., Am,1, Am,2, Am,3) pourvus chacun d'un micro-dispositif de commande respectif (MC1, MC2, MC3) qui est électroniquement connecté aux micro-dispositifs de commande des éléments d'alimentation en fil positive qui lui sont adjacents dans la pile, et une unité de commande (CU) adaptée pour échanger des données avec lesdites piles d'éléments d'alimentation en fil positive par le biais d'un bus série principal (L), **caractérisé en ce qu'**au moins un desdits éléments d'alimentation en fil positive est connecté à un bus série secondaire respectif (K1, K2k, ..., Km) qui, quant à lui, est connecté audit bus série principal (L) par le biais d'une passerelle respective (G1, G2, ..., Gm) qui est programmée pour recoder des messages transmis par ladite unité de commande (CU) sur ledit bus série principal (L) en messages correspondants sur ledit bus série secondaire (K1, K2k, ..., Km), et vice versa.

2. Appareil d'alimentation en fil selon la revendication 1, **caractérisé en ce que** ladite passerelle (G1', G2', ..., Gm') est incorporée dans un élément d'alimentation en fil positive agencé sur la pile respective (A1,1', A2,1', ... , Am,1').

3. Appareil d'alimentation en fil selon la revendication 1, **caractérisé en ce que** ladite passerelle (G1, G2, ..., Gm) est constituée d'un dispositif matériel qui est agencé sur la pile respective d'éléments d'alimentation en fil positive (A1,1, A2,1, ..., Am,1) et est pourvu d'un micro-dispositif de commande respectif (MCG).

4. Appareil d'alimentation en fil selon l'une quelconque des revendications 1 à 3, **caractérisé en ce que** ladite passerelle (G1, G2, ..., Gm) comprend un émetteur-récepteur différentiel (T) qui est connecté, d'un côté, audit bus série principal (L) et, de l'autre côté, à un dispositif de commande (CANC) pourvu d'une interface de communication série (SCIG) à laquelle est connecté ledit bus série secondaire (K1).

5. Appareil d'alimentation en fil selon l'une quelconque des revendications 1 à 4, **caractérisé en ce que** ledit bus série secondaire (K1) est constitué de deux lignes de niveau de logique (RXD, TXD) pour les données reçues et les données transmises respectivement, qui sont directement connectées aux broches des micro-dispositifs de commande des éléments d'alimentation en fil positive respectifs.

6. Appareil d'alimentation en fil selon la revendication 1, **caractérisé en ce que** ledit bus série principal (L, L') est un bus CAN.

7. Appareil d'alimentation en fil selon la revendication 1, **caractérisé en ce que** ledit bus série principal (L, L') est un bus RS485.
